# EUROPEAN PATENT SPECIFICATION

(11) **EP 3 582 439 B1**
(45) Date of publication and mention of the grant of the patent: **06.10.2021**
(21) Application number: 18191385.6
(22) Date of filing: 29.08.2018
(51) Int. Cl.: H04L 12/24, H04W 84/18, H04W 4/50, H04W 4/70, H04W 8/24, H04W 12/06, H04L 29/06, H04L 29/08, G06F 8/65, H04L 9/32, H04W 88/02, H04W 88/16, H04W 88/18, H04W 84/22

(54) **METHOD FOR PROVIDING AN OVER THE AIR (OTA) UPDATE TO DEVICES OF AN INTERNET OF THINGS (IOT) PLATFORM**
VERFAHREN ZUR BEREITSTELLUNG EINER OVER-THE-AIR (OTA)-AKTUALISIERUNG FÜR VORRICHTUNGEN EINER INTERNET-DER-DINGE (IOT)-PLATTFORM
PROCÉDÉ PERMETTANT DE FOURNIR UNE MISE A JOUR PAR VOIE HERTZIENNE (OTA) AUX DISPOSITIFS D'UNE PLATE-FORME D'INTERNET DES OBJETS (IDO)

(30) Priority: 11.06.2018 EP 18177032
(43) Date of publication of application: 18.12.2019
(73) Proprietor: PARADOX ENGINEERING SA, 6883 Novazzano (CH)
(72) Inventor: MINETTI, Giovanni, 6830 Chiasso (CH); CALABRO', Gaetano, 6830 Chiasso (CH); CRESPI, Nicola, 20900 Monza (MB) (IT)
(74) Representative: M. Zardi & Co S.A.

(56) References cited:
- US-A1- 2018 183 587
- KINKELIN HOLGER ET AL: "Trustworthy configuration management for networked devices using distributed ledgers", NOMS 2018 - 2018 IEEE/IFIP NETWORK OPERATIONS AND MANAGEMENT SYMPOSIUM, IEEE, 23 April 2018 (2018-04-23), pages 1-5, XP033371804, DOI: 10.1109/NOMS.2018.8406324 [retrieved on 2018-07-06]
- Holger Kinkelin ET AL: "Trustworthy Configuration Management with Distributed Ledgers", , 13 April 2018 (2018-04-13), pages 1-120, XP055516365, Munich, Germany Retrieved from the Internet: URL:https://www.net.in.tum.de/fileadmin/bi btex/publications/theses/2018_trustworthy_ config_management_ma.pdf [retrieved on 2018-10-17]
- ELLUL JOSHUA ET AL: "AlkylVM: A Virtual Machine for Smart Contract Blockchain Connected Internet of Things", 2018 9TH IFIP INTERNATIONAL CONFERENCE ON NEW TECHNOLOGIES, MOBILITY AND SECURITY (NTMS), IEEE, 26 February 2018 (2018-02-26), pages 1-4, XP033342892, DOI: 10.1109/NTMS.2018.8328732 [retrieved on 2018-03-29]

## Description

### Field of application

The present invention relates to a method for providing an Over The Air (OTA) update to devices of an Internet of Things (IoT) platform.

More particularly, the invention relates to a method of the type cited above, wherein the IoT platform includes a plurality of devices and the update is addressed from a CMS (Central Management System) to one or more devices to be updated. The devices are connected through a wireless connection, for instance a LPWAN or 3GPP or any other kind of wireless network.

The present invention also relates to a system for implementing the above mentioned method for providing an Over The Air (OTA) update.

### Prior art

It is known that an Internet of Things (IoT) platform is a network of devices, generally associated to physical items such as home, city or industrial appliances, machines or vehicles, embedded with electronics, software, sensors, actuators, and connectivity which enables them to connect and exchange data.

Each device is uniquely identifiable through an embedded computing system and is able to interoperate with other devices of the IoT platform. It may also be controlled remotely through the IoT platform, therefore improving direct integration of physical world into computer-based systems.

In order to maintain the devices of the IoT platform up to date, for instance with new versions of an Operative System or firmware, or to upgrade applications stored therein, as well as to upload new applications and functionalities, it is also known the Over-the-air programming (OTA), which is a method for distributing and updating software, configuration and settings into the device of IoT platform.

According to this method, one central device or Central Management System sends an update to one or more devices of the IoT platform which is connected to the devices in the IoT platform. At least for some applications, the devices are not enabled to refuse, defeat or change the update: the update is applied immediately, for instance to prevent or correct error potentially caused by devices not up to date. Especially in these application, i.e. where the devices are not enabled to refuse the OTA update, it may happen that a malicious system enters the IoT platform and sends not authorized and potentially dangerous OTA updates to the devices, which therefore become hacked.

For instance, in case of mandatory updates, a device may be forced to upload a malicious software not sent from the Central Management System, but by a third party, which has been able to present to the device in place of the Central Management System. At least in principle, the Central Management System actually authorized to send the uploads is able to detect these security faults and to identify the device, which has received the unauthorized content from the third party; however, it may be difficult to detect why and when the third party has entered the IoT platform and how has been able to upload the malicious software (or any other kind of undesired content) into the device.

In some other applications, also with the aim to overcome the problem of hacking, a device may be enabled to refuse OTA updates but at the cost to be kicked off from the IoT platform. Still in some other applications, a device may be entitled to remain in the IoT platform also when it refuses an update. However, in all these scenarios, several security issues may affect the IoT platform or at least some of its devices, for instance due to error caused by devices not up to date.

The problem at the base of the present invention is to provide a method for uploading data to devices of an IoT platform which is able to prevent that an update, sent from an unauthorized party to a device is accepted, but also to enable the Central Management System actually entitled to send the upload to retrieve information concerning the status of update of the devices, the history of all the updates received and uploaded from each device, from the beginning of its connection to the IoT platform, therefore improving security of the devices and their reliability, and ultimately the value of the information they treat, given that only a device perfectly compliant with the specific of the software and firmware with which it is released, at any phase of its life cycle, may be considered a trustable source of the information it handles.

An example of a method for providing updates of devices of an IoT platform according to the prior art is given in "Trustworthy configuration management for networked devices using distributed ledgers" (XP033371804).

### Summary of the invention

The idea at the base of the present invention is to adopt a block-chain as a trusted middleware between one or more Central Management Systems of an IoT platform and devices of the IoT platform to control and arbitrate the transmission of OTA updates addressed from the at least one Central Management System to the devices and to control and arbitrate the responses from said devices to the at least one Central Management System, storing a history of updates and responses in an immutable ledger of the block-chain.

According to this solution idea, the technical problem mentioned above is solved by a method for providing an Over The Air (OTA) update to devices of an Internet of Things (IoT) platform, wherein the update is provided from a Central Management System , and wherein
a mediator process in the Central Management System transmits a request of update of one or more of said devices to be updated to a block-chain system including a plurality of nodes, wherein the block-chain system delivers the update to said one or more devices to be updated only if said request of update from the Central Management System is validated and authorized from the nodes of the block-chain system, and wherein said request of update is delivered from the block-chain system to the one or more devices to be updated through a second mediator process which is associated to the devices of the IoT platform, the method further comprising the features of claim 1.

An update may, for example, comprise: firmware or other software updates; scripts, parameters, e.g. operational parameters, sensor or actuator settings, timetables or threshold values. It may also comprise one or multiple files. The update may comprise a full update, e.g. a complete image of a script or software. In other embodiments it may comprise incremental updates, or so-called delta-pack updates.

Advantageously, according to the idea of solution above mentioned, an update is delivered to the devices of the IoT platform only when the Central Management System has been authorized by the block-chain system and at the condition that the content of the update has been verified by the block-chain system itself. On the other hand, also the event or response of the device after update is delivered to the Central Management System only when the device has been authorized by the block-chain system and its content (event and/or response) verified. Therefore, value and trust-ability of information received from the device significantly improves and may constitute a complete ledger of information regarding each of the device of the IoT Platform from the first set up of the platform on.

According to different embodiment of the inventions, a gateway is provided between devices of the IoT platform and the block-chain.

According to the present invention, the second mediator process is executed in at least one of the devices of the IoT platform. Preferably, at least the device of the IoT platform executing the second mediator process includes a telecommunication interface and the telecommunication interface receives the request of update of the one or more devices directly from the block-chain system. The telecommunication interface is for instance a LPWAN interface.

The at least one device of the IoT platform having the telecommunication interface communicates the request of update to other devices of the IoT platform by means of a LPWAN or Bluetooth Low Energy (BLE) radio interface, for instance 6LowPANor a short range and low power radio interface. Said other device of the IoT platform may be not equipped with the telecommunication interface. However, nothing prevents that one or more, also all, of said other devices of the IoT platform are equipped with the telecommunication interface.

According to the present disclosure, the second mediator process is executed on a gateway connected to the devices of the IoT platform through a radio interface, for instance 6LowPAN or a short range and low power radio interface. The gateway includes a telecommunication interface, for instance LPWAN, receiving the request of update of said one or more devices to be updated from the block-chain system. The gateway further includes the radio interface transmitting the request of update to said one or more devices to be updated.

The flow of information, including the request of update, from the Central management to the device is controlled by the block-chain system. Also the flow of information from the devices of the IoT platform to the Central management is controlled by the block-chain system, this information including responses, reports or events of the devices generated following the update execution.

Each device of said one or more devices which have received the update applies the update and returns to the block-chain system an event and/or a response by means of the second mediator process, once the update has been applied. The request of update and the event and/or response are therefore associated to a block-chain transaction.

The request of update, the event and/or the response is appended to the ledger only if the nodes of the block-chain reach a consensus.

More particularly, the consensus for updating the ledger is reached if a predetermined number of nodes among the totality of the nodes of the block-chain have validated the request of update, the event and/or the response.

To the contrary, the consensus to deny an update of the ledger is reached if the predetermined number of nodes among the totality of the nodes of the block-chain has refused the request of update, the event and/or the response. In this case, the ledger is not updated, i.e. the request of update, the event and/or response are not appended to the ledger.

In one embodiment of the invention the consensus for accepting or refusing a request of update, the event and/or response is reached when at least 51% of the nodes of the block-chain has, respectively, accepted of refused the request of update, the event and/or the response. However, different percentages may be set in a configuration phase according to the present invention.

The mediator process of the Central Management System is enabled to read the ledger and to retrieve from the ledger the event and/or response of devices of the IoT platform to control a state of update of said devices.

According the present invention, the update from the Central Management System is an OTA command addressed from a user of the Central Management System to the one or more of said devices to be updated, wherein the mediator process retrieves a cryptographic key associated to the user in the Central Management System and returns the OTA command to the block-chain as a request of transaction signed by the cryptographic key of the user. The nodes of the block-chain receive the request of transaction from the mediator process and deliver it to other nodes of the block-chain system for verification.

On the other end, the event and/or response is addressed from the device of the IoT Platform, which has applied the update, to the Central Management System, and the second mediator process retrieves a cryptographic key associated to the device of the IoT Platform, which has applied the update and returns the event and/or response to the block-chain as a block-chain transaction signed with the cryptographic key of the device. The nodes of the block-chain receive the request of transaction from the mediator process and deliver it to other nodes of the block-chain system for verification.

In one embodiment of the invention, the update is a firmware or software update of said one or more devices to be updated.

A mediator processes can be implemented as a block-chain agent. E.g., the gateway could run a block-chain agent acting as an interface between the gateway and the block-chain. Thus, in some embodiments the method utilizes a multi agent system in combination with a block-chain network. The mediator process can be configured to listen to block-chain events, in order to receive update notifications addressed to a specific device.

Upon receiving such a notification, the mediator process then downloads data, e.g. one or more data files, from the block-chain. The update notification can be issued from the CMS. The data could also be provided by the CMS, but could also be fetched from another participant of the IoT platform, e.g. from a file server.

After downloading the data, the mediator process preferably safes this data to a local data storage. In some embodiments the data is saved to a local directory of the data storage. The local directory can be a storage location that is unique to the IP of the device to be updated. In another step, when the download completed, the mediator process informs a gateway application that an upgrade is available. The gateway application then can send a notification to the device to be updated, e.g. by using hypertext transfer protocol (http or https). Finally, the gateway can deliver, and/or initialize, and/or execute the update of the device.

Preferably, after completion of the update process, the gateway application informs the mediator process, e.g. via an unsolicited event, that the update has been successfully installed or that an error occurred. The mediator then can forward this unsolicited event to the block-chain. Finally, the transaction history can be added to the ledger of the block-chain.

In general, the block-chain can either be a private block-chain (permissioned block-chain) or a public block-chain (permissionless block-chain). In case a public block-chain is implemented, it is expedient that the block-chain nodes have to find a consensus in order to verify the validity of the transaction history, before appending it to the ledger. Thus, in such embodiments a consensus protocol, e.g. a proof-of-work protocol, is employed. Based on the outcome of the consensus protocol, a new block can be added to the ledger.

A private block-chain can for example be based on one of the following block-chain systems: Hyperledger Fabric, Tendermint, R3 Corda, and MultiChain. In such systems, the IoT platform may comprise a certification authority for registering users and for distributing the credentials, i.e. the public keys and private keys. For example, the certification authority could be implemented in one or more CMS or via the block-chain itself.

Furthermore, in some embodiements the block-chain relies on properties of Keyless Signature Infrastructure (KSI), which is a globally distributed system for time-stamping and server-supported digital signature services. KSI block-chain is for example described in Buldas, A. Kroonmaa, A., Laanoja, R.: Keyless signatures' infrastructure: How to build global distributed hash-trees, Nordic Conference on Secure IT Systems (2013), p. 313-320.

The applicant has advantageously implemented the method by implementing nodes of the block-chain system as a Virtual Machine, for instance one single Virtual Machine for one corresponding node. This implementation is particularly advantageous for IoT platform for which it is difficult couple a peer to peer network of physical devices as a block-chain system or also for test purpose. One or more Virtual Machines, each corresponding to one or more nodes, may be executed in a same workstation.

Of course, nothing prevents that a part or all the nodes of the block-chain system are physical devices.

In another aspect, the invention refers to an actuator or sensor, wherein the actuator or sensor comprises a microcontroller running a computer program, wherein the computer program is configured to register the actuator or sensor in an IoT platform and to update the actuator or sensor via a method described above. Preferably, the sensor or actuator devices can be dynamically added to the IoT platform.

In some advantageous embodiments, the registration of the actuator or sensor in the IoT platform comprises the registration of a public key associated with actuator or sensor. In such embodiments, the actuator or sensor can participate in an asymmetric cryptographic system that uses pairs of keys, comprising public keys and private keys.

In some embodiments, each user or device can have its own self-generated key pair (private key and public key) or can use a Hardware Security Module (HSM), i.e. a physical computing device that safeguards and manages digital keys and/or provides cryptoprocessing.

The public keys can, for example, be based on elliptic curve cryptography. Furthermore, the private keys can be used to create signatures of requests that are used for authentication in the block-chain.

E.g., the actuator or sensor device communicates with a gateway device upon start up and performs a negotiation process, which involves sending the sensor's or actuator's public key to the gateway. Then, a gateway application forwards the signed request, including the device identity/identification number (ID) and the device's public key to the mediator. The mediator then delivers this key to the block-chain.

The block-chain then preferably checks, if the gateway key is registered in a user registry and verifies the gateway signature. Furthermore, the block-chain checks if the ID of the actuator or sensor device is registered in a user registry of the IoT, e.g. in a registry of the CMS or in a registry of the block-chain, e.g. in the ledger. If this procedure has been successfully carried out, the new actor or sensor device's key is finally added to the user registry.

Further features and advantages of the method and the actor or sensor according to the present invention are described here below with reference to the enclosed drawings given only for exemplificative purpose and without limiting the scope of protection of the claims.

### Brief description of the drawings

Fig. 1 schematically represents a method for providing an Over The Air (OTA) update to devices of an Internet of Things (IoT) platform according to an embodiment of the present invention.
Fig. 2 schematically represents the method for providing an Over The Air (OTA) update to devices of an Internet of Things (IoT) platform according to another embodiment of the present invention.

### Detailed description

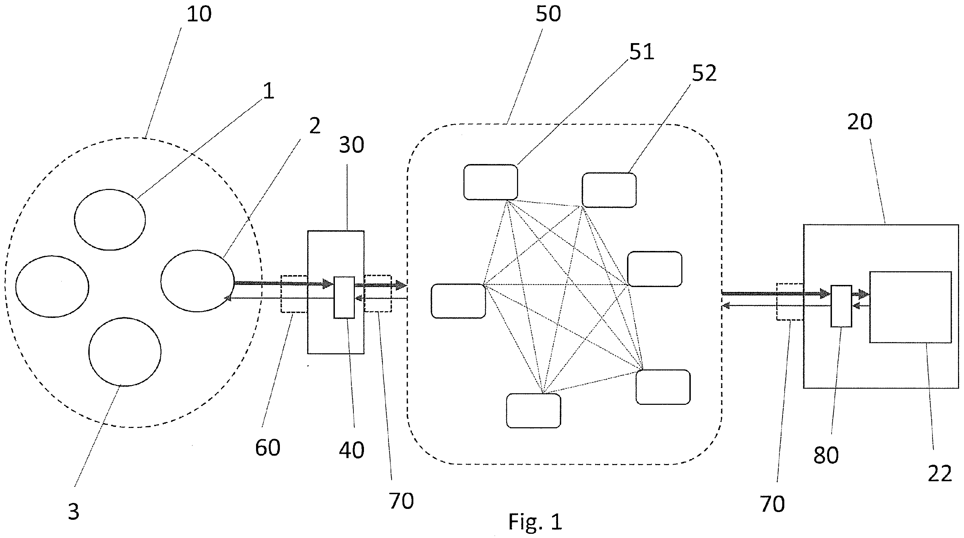

With reference to figure 1 it is schematically represented an Internet of Things (IoT) platform 10, i.e. a network of devices 1, 2, 3 which are or may be associated to physical items such as home, city or industrial appliances, machines or vehicles, embedded with electronics, software, sensors, actuators, and connectivity which enables them to connect and exchange data. Each device 1, 2, 3 includes a radio interface, for instance a 6LowPan interface or another short range interface, enabling a first device 1 to connect a second device 2 and eventually to connect the first device 1 to a third and more distant device 3 through the second device 2. Each device 1, 2, 3 is uniquely identifiable through an embedded computing system and is able to interoperate with other devices of the IoT platform, or may be controlled remotely through the IoT platform.

The devices of the IoT platform may be updated, for instance with new versions of an Operating System or firmware, or with updated applications, as well as to upload new applications and functionalities. Updates are provided by a Central Management System 20. Preferably, the update complies with Over-the-air programming (OTA), which is a method for distributing and updating software, configuration and settings into the device of IoT platform. The Central Management System is outside the radio range (6lowPan or other) of the devices of the IoT platform and is connectable through a telecommunication interface 70. In figure 1, the telecommunication interface 70 is on board the Central Management System 20 and on board a gateway 30 between the device of the IoT platform and the Central Management System 20.

The gateway 30 is also equipped with a radio interface 60 adapted to communicate with the radio interface of the device of the IoT platform (the radio interface of the device of the IoT platform is not indicated in the drawing). The Central Management System addresses a request of update to one or more devices 1, 2 to be updated.

More particularly, according to the present invention, a block-chain between the Central Management System and the devices of the IoT platform controls and authorizes the flow of information, including the request of updates.

A mediator process 80 in the Central Management System and a second mediator process 40 in the gateway 30 are provided to enter the information into the block-chain 50 and to receive the information from the block-chain 50. The block-chain 50 includes a plurality or nodes 51, 52, connected in a peer to peer network, with which the mediator process 80 and the second mediator process 40 are entitled to communicate, through respective cryptographic keys.

In this respect, an application 22 in the Central Management System is provided to send a request of update in the form of an OTA command to at least one or more of the devices of the IoT platform. The OTA command is processed by the mediator process 80. More particularly, the mediator process 80 retrieves a cryptographic key of a user which has requested the update inside the Central Management System and signs the OTA command with the cryptographic key. The signed OTA command is transmitted, for instance through the telecommunication interface 70 of the Central Management System to the block-chain system, in the form of a block-chain transaction. The block-chain transaction among other information embeds the update and the identification information of the device(s) to be updated.

According to one embodiment of the invention, the block-chain transaction embeds also a file corresponding to the update that is applied at the device of the IoT platform, for instance a new version of the firmware or a new application or a new configuration for the device or a new version of a script that can be executed by the device. The update can, for example, be delivered as a complete image of the data to be updated, or as a so-called delta-pack, which only comprises the changes with respect to a previous version of the data to be updated.

According to another embodiment of the invention, the block-chain transaction does not embed the file corresponding to the update but a reference to such file and a hash value of the file. The file is physically stored on (for instance) a remote server and is retrieved from it only when -and if- the block-chain allows delivery of the request of update to the IoT device. In this case, the second mediator process may use the hash value of the file to ascertain that the file retrieved from the remote server is actually the file of the request of update validated by the block-chain.

Once the transaction has entered the block-chain, the nodes 51, 52 verifies its trust-ability on the base of a ledger storing all the previous updates already applied to the devices of the block-chain, each update being associated to a precise entity which has requested it, i.e. the user of the Central Management System identifiable through the corresponding cryptographic key, and the entity which has applied in the IoT platform, i.e. a specific device univocally identifiable through the corresponding ID. A cryptographic key is also associated to each device of the IoT platform, as explained subsequently in connection with the flow from the devices to the Central Management System.

Still with reference to the block-chain of figure 1, if the OTA command in the block-chain transaction is not authorized by the nodes of the block-chain, its delivery to the devices of the IoT platform is denied. To the contrary, if the OTA command in the block-chain transaction is authorized by the nodes, it is transmitted to the gateway, for instance through the telecommunication interface of the gateway, and processed by the second mediator process 40 in the gateway. The second mediator process 40 may extract from the block-chain transaction the OTA command (including the file, if embedded in the transaction) and the information regarding the devices to which it is addressed, and finally deliver the OTA command to the devices to be updated, through the radio interface 60. At this point, when the device(s) of the IoT platform has received the OTA command, it may apply it, for instance upgrading the firmware, or a software, or a script, or a configuration inside the device.

At the end of the update, the device(s) of the IoT platform returns a message or a response or an event or a report, i.e. an information concerning the result of the update, for instance whether the update has been executed correctly or not, the last version of the software installed, etc, etc, .... This information is returned to the Central Management System, still under the control of the block-chain system 50.

The flow of information from the IoT devices to the Central Management System is substantially symmetrical to the flow of information from the Central Management System to the IoT devices.

More particularly, the device of the IoT platform sends the event or response to the second mediator process 40. The second mediator process 40 retrieves a cryptographic key of the device of the IoT platform and signs the event or response with the cryptographic key of the device. The signed event or response is transmitted, for instance through the telecommunication interface 70 of the second mediator process 40 to the block-chain system, in the form of a block-chain transaction.

If the event or response in the block-chain transaction is not authorized by the nodes of the block-chain, its delivery to the Central Management System is denied. To the contrary, if the event or response in the block-chain transaction is authorized by the nodes, it is transmitted to the Central Management System, and processed by the mediator process 80. The mediator process 80 may extract from the block-chain transaction the event or response and the information regarding the devices from which the event or response derives, and finally deliver the event or response to the application 22 of the Central Management System (or to another application of the Central Management System).

Some further details of the steps of the method according to the present invention are given here below, still with reference to figure 1.

The device of the IoT platform communicates through the radio interface of the gateway, where the second mediator process 40 receives the message or response or event or report and embeds it in a block-chain transaction for the block-chain 50.

The block-chain transaction is transmitted for instance through the telecommunication interface 70 to the block-chain 50. The nodes 51, 52 are responsible to verify the trust-ability of the block-chain transaction and to deny or allow its receipt at the Central Management System. For instance, if the cryptographic key with which it has signed the block-chain transaction does not correspond to the cryptographic key of the device of the IoT platform, which has provided the message or response or event or report, the block-chain transaction is discarded, i.e. it is not appended to the ledger, and it is not delivered to the Central Management System. To the contrary, if the block-chain transaction is authorized by the nodes 51, 52 (block-chain), the block-chain transaction is appended to the ledger and it is forwarded to the mediator process 80. The mediator process retrieves from the block-chain transaction the message or response or event or report.

The ledger stores the history of all the OTA updates delivered in the past to the device of the IoT platform. Moreover, the ledger stores the history of all the events and/or responses returned by the IoT platform. E.g., a request of an update can be send to the gateway, which may respond by generating one or more events. The gateway then can forward the update to devices of the IoT platform. The devices may acknowledge the update completion. Any or all of these events may be stored in the ledger.

Advantageously, the ledger is readable to the Central Management System, which may therefore retrieve any information on the devices change history since the beginning of their deployment into the platform.

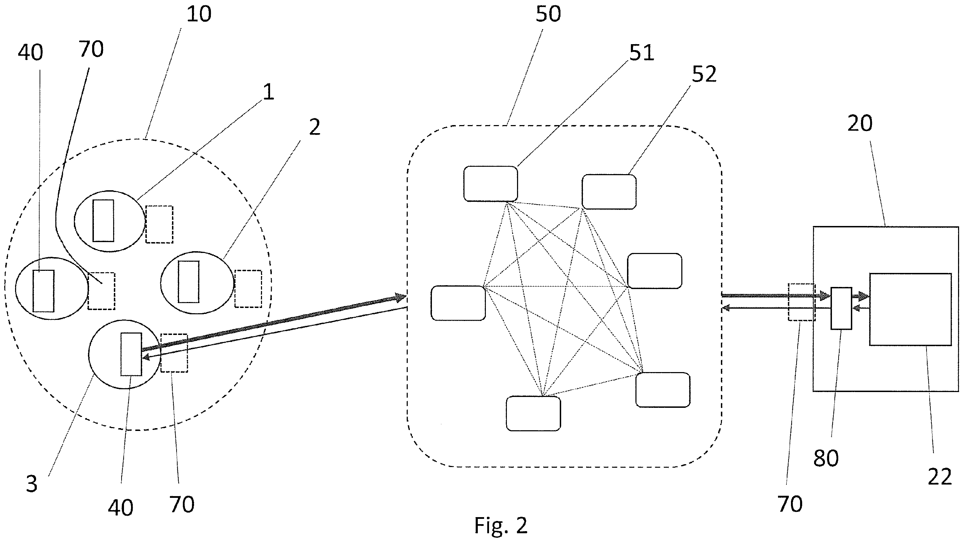

Figure 2 schematically represents an embodiment of the present invention, wherein the second mediator process 40 is installed inside at least one of the devices of the IoT platform provided with a telecommunication interface. In this embodiment of the invention, it is not necessarily a gateway, which receives the request of update from the Central Management System, since the requests are directly received (always through the block-chain system 50) by the device of IoT platform, which is provided with the telecommunication interface.

According to different possible embodiments,
- all the devices 1, 2, 3 are provided with the telecommunication system 70 and all the devices 1, 2, 3 are provided with the second mediator process 40;
- all the devices 1, 2, 3 are provided with the telecommunication system 70 and just one (or more than one but not all) of the device are provided with the second mediator process 40.

## Claims

1. Method for providing an update to devices (1, 2, 3) of an Internet of Things platform (10), wherein the update is provided by a Central Management System (20) and wherein
a mediator process (80) in the Central Management System (20) transmits a request of update of one or more of said devices (1, 2, 3) to be updated to a block-chain system (50) including a plurality of nodes (51, 52), wherein the block-chain system (50) delivers the update to said one or more devices (1, 2) to be updated only if said request of update from the Central Management System (20) is validated and authorized from at least some of the nodes (51, 52) of the block-chain system (50), and wherein said request of update is delivered from the block-chain system (50) to the one or more devices (1, 2) to be updated through a second mediator process (40) which is associated to the devices (1, 2, 3) of the Internet of Things platform, **characterized by** the fact that -the update is an Over The Air, OTA, update;
- the second mediator process (40) is executed in at least one of the devices (1, 2, 3) of the Internet of Things platform (10),
- each device (1) of said one or more devices (1, 2) which have received the update applies the update and returns to the block-chain system (50) an event and/or a response by means of said second mediator process (40), once the update has been applied,
- said update from the Central Management System (20) is an OTA command addressed from a user of the Central Management System (20) to the one or more of said devices (1, 2) to be updated,
- the mediator process (80) of the Central Management System (20) retrieves a cryptographic key associated to the user in the Central Management System and returns the OTA command to the block-chain (50) as a request of transaction signed by said cryptographic key of the user, and wherein
- the nodes (51, 52) of the block-chain (50) receive the request of transaction from the mediator process (80) and deliver it to other nodes (52) of the block-chain system for verification.

2. Method according to claim 1 wherein said at least one of the devices (1, 2, 3) of the Internet of Things platform (10) which executes the second mediator process (40) includes a telecommunication interface (70) and wherein the telecommunication interface (70) receives the request of update of said one or more devices (1, 2) directly from the block-chain system (50).

3. Method according to claim 2 wherein said request of update and said event and/or response are associated to a block-chain transaction.

4. Method according to claim 3 wherein said request of update, and/or said event and/or said response are appended to a ledger of the block-chain only if the nodes (51, 52) of the block-chain reach a consensus, wherein the consensus for appending the request of update, and/or the event and/or the response to the ledger is reached if a predetermined number of nodes among the nodes (51, 52) of the block-chain have validated the request of update, and/or the event and/or the response.

5. Method according to claim 4 wherein the mediator process (80) of the Central Management System (20) is enabled to read the ledger and to retrieve from the ledger the event and/or response of devices (1, 2, 3) of the Internet of Things platform to control the history of updates of said devices (1, 2, 3).

6. Method according to claim 1 wherein
- said event and/or response is addressed from the device (1) of the Internet of Things Platform (10) which has applied the updated to the Central Management System (20), wherein the second mediator process (40) retrieves a cryptographic key associated to said device (1) of the Internet of Things Platform (10) which has applied the update and returns the event and/or response to the block-chain as a block-chain transaction signed with said cryptographic key of the device, wherein
- the nodes (51, 52) of the block-chain (50) receive the request of transaction from the mediator process (40) and deliver it to other nodes (52) of the block-chain system for verification.

7. Method according to claim 1 wherein the update is a firmware, or software update, or an update of a script that can be executed by said one or more devices (1, 2) to be updated, or a change of configuration of said one or more devices (1, 2) to be updated.

8. Method according to claim 1 wherein the devices (1, 2) of the Internet of Things platform are connected through a LPWAN or Bluetooth Low Energy wireless connection.

9. Method according to claim 1 wherein each node (51) of the block-chain system (50) is executed in a Virtual Machine or Container Image, wherein one or more Virtual Machines or Container Image of corresponding one or more nodes are on a same workstation.

10. Method according to claim 1 wherein the nodes (51, 52) of the block-chain system (50) are physical devices.

11. Actuator or sensor, wherein the actuator or sensor comprises a microcontroller running a computer program, wherein the computer program is configured to register the actuator or sensor in the Internet of Things platform and to update the actuator or sensor by a method according to one of the claims 1 to 10.

12. Actuator or sensor according to claim 11, wherein the registration of the actuator or sensor in the Internet of Things platform comprises the registration of a public key associated with the actuator or sensor.

## Patentansprüche

1. Verfahren zum Bereitstellen einer Aktualisierung für Vorrichtungen (1, 2, 3) einer Plattform des Internet-der-Dinge (10), wobei die Aktualisierung durch ein zentrales Verwaltungssystem (20) bereitgestellt wird und wobei ein Vermittlungsprozess (80) in dem zentralen Verwaltungssystem (20) eine Aktualisierungsanforderung für eine oder mehrere der zu aktualisierenden Vorrichtungen (1, 2, 3) an ein Blockkettensystem (50) mit einer Vielzahl von Knoten (51, 52) überträgt, wobei das Blockkettensystem (50) die Aktualisierung an die eine oder mehreren zu aktualisierenden Vorrichtungen (1, 2) liefert, die aktualisiert werden sollen, nur wenn die Aktualisierungsanforderung von dem zentralen Verwaltungssystem (20) von mindestens einigen der Knoten (51, 52) des Blockkettensystems (50) validiert und autorisiert wird, und wobei die Aktualisierungsanforderung von dem Blockkettensystem (50) an das eine oder die mehreren Vorrichtungen (1, 2), die aktualisiert werden sollen, durch einen zweiten Vermittlungsprozess (40) geliefert wird, der mit den Vorrichtungen (1, 2, 3) der Plattform des Internet-der-Dinge assoziiert ist, **dadurch gekennzeichnet, dass** - die Aktualisierung eine Over-the-Air (OTA) Aktualisierung ist;
- der zweite Vermittlungsprozess (40) in mindestens einer der Vorrichtungen (1, 2, 3) der Plattform des Internet-der-Dinge (10) ausgeführt wird,
- jede Vorrichtung (1) der einen oder mehreren Vorrichtungen (1, 2), die die Aktualisierung erhalten haben, die Aktualisierung anwendet und an das Blockkettesystem (50) ein Ereignis und/oder eine Antwort mittels des zweiten Vermittlungsprozesses (40) zurückgibt, sobald die Aktualisierung angewendet wurde,
- die Aktualisierung vom zentralen Verwaltungssystem (20) ein OTA-Befehl ist, der von einem Benutzer des zentralen Verwaltungssystems (20) an die eine oder mehrere der Vorrichtungen (1, 2) gerichtet ist, die aktualisiert werden sollen,
- der Vermittlungsprozess (80) des Zentralverwaltungssystems (20) einen kryptographischen Schlüssel abruft, der dem Benutzer in dem Zentralverwaltungssystem zugeordnet ist, und den OTA-Befehl an die Blockkette (50) als eine Transaktionsanforderung zurücksendet, die durch den kryptographischen Schlüssel des Benutzers signiert ist, und wobei
- die Knoten (51, 52) der Blockkette (50) die Transaktionsanforderung von dem Vermittlungsprozess (80) empfangen und sie an andere Knoten (52) des Blockkettensystems zur Überprüfung liefern.

2. Verfahren nach Anspruch 1, wobei das mindestens eine der Vorrichtungen (1, 2, 3) der Plattform des Internet-der-Dinge (10), die den zweiten Vermittlungsprozess (40) ausführt, eine Telekommunikationsschnittstelle (70) enthält und wobei die Telekommunikationsschnittstelle (70) die Aktualisierungsanforderung der einen oder mehreren Vorrichtungen (1, 2) direkt vom Blockkettensystem (50) empfängt.

3. Verfahren nach Anspruch 2, wobei die Aktualisierungsanforderung und das Ereignis und/oder die Antwort mit einer Blockkettentransaktion verbunden sind.

4. Verfahren nach Anspruch 3, wobei die Aktualisierungsanforderung und/oder das Ereignis und/oder die Antwort nur dann an ein Hauptbuch der Blockkette angehängt werden, wenn die Knoten (51, 52) der Blockkette einen Konsens erreichen, wobei der Konsens zum Anhängen der Aktualisierungsanforderung und/oder des Ereignisses und/oder der Antwort an das Hauptbuch erreicht wird, wenn eine vorbestimmte Anzahl von Knoten unter den Knoten (51, 52) der Blockkette die Aktualisierungsanforderung und/oder das Ereignis und/oder die Antwort validiert haben.

5. Verfahren nach Anspruch 4, wobei der Vermittlungsprozess (80) des Zentralverwaltungssystems (20) in der Lage ist, das Hauptbuch zu lesen und aus dem Hauptbuch das Ereignis und/oder die Antwort von Vorrichtungen (1, 2, 3) der Plattform des Internet-der-Dinge abzurufen, um den Verlauf der Aktualisierungen der Vorrichtungen (1, 2, 3) zu steuern.

6. Verfahren nach Anspruch 1, wobei
- das Ereignis und/oder die Antwort von dem Gerät (1) der Plattform des Internet-der-Dinge (10) adressiert wird, das die Aktualisierung auf das zentrale Verwaltungssystem (20) angewandt hat, wobei der zweite Vermittlungsprozess (40) einen kryptographischen Schlüssel abruft, der der Vorrichtung (1) der Plattform des Internet-der-Dinge (10) zugeordnet ist, die die Aktualisierung angewandt hat, und das Ereignis und/oder die Antwort an die Blockkette als eine Blockkette-Transaktion zurückgibt, die mit dem kryptographischen Schlüssel der Vorrichtung signiert ist, wobei
- die Knoten (51, 52) der Blockkette (50) die Transaktionsanforderung von dem Vermittlungsprozess (40) empfangen und sie an andere Knoten (52) des Blockkettensystems zur Verifizierung weiterleiten.

7. Verfahren nach Anspruch 1, wobei die Aktualisierung eine Firmware- oder Software-Aktualisierung oder eine Aktualisierung eines Skripts ist, das von dem einen oder den mehreren zu aktualisierenden Vorrichtungen (1, 2) ausgeführt werden kann, oder auch eine Veränderung der Konfiguration der einen oder mehreren zu aktualisierenden Vorrichtungen (1, 2).

8. Verfahren nach Anspruch 1, wobei die Vorrichtungen (1, 2) der Plattform des Internet-der-Dinge über eine LPWAN- oder Bluetooth-Low-Energy-Funkverbindung verbunden sind.

9. Verfahren nach Anspruch 1, wobei jeder Knoten (51) des Blockkettensystems (50) in einer Virtuellen Maschine oder einem Container-Image ausgeführt wird, wobei eine oder mehrere Virtuelle Maschinen oder ein Container-Image des entsprechenden Knotens oder der entsprechenden Knoten sich auf derselben Workstation befinden.

10. Verfahren nach Anspruch 1, wobei die Knoten (51, 52) des Blockkettensystems (50) physikalische Geräte sind.

11. Aktor oder Sensor, wobei der Aktor oder Sensor einen Mikrocontroller umfasst, der ein Computerprogramm ausführt, wobei das Computerprogramm konfiguriert ist, um den Aktor oder Sensor in der Plattform des Internet-der-Dinge zu registrieren und den Aktor oder Sensor durch ein Verfahren nach einem der Ansprüche 1 bis 10 zu aktualisieren.

12. Aktor oder Sensor nach Anspruch 11, wobei die Registrierung des Aktors oder Sensors in der Plattform des Internet-der-Dinge die Registrierung eines mit dem Aktor oder Sensor verbundenen öffentlichen Schlüssels umfasst.

## Revendications

1. Procédé pour fournir une mise à jour à des dispositifs (1, 2, 3) d'une plate-forme de l'Internet des Objets (10), dans lequel la mise à jour est fournie par un Système Central de Gestion (20) et dans lequel :
un processus de médiation (80) dans le Système Central de Gestion (20) émet une requête de mise à jour d'un ou de plusieurs desdits dispositifs (1, 2, 3) à mettre à jour sur un système à chaîne de blocs (50) qui inclut une pluralité de nœuds (51, 52), dans lequel le système à chaîne de blocs (50) délivre la mise à jour sur lesdits un ou plusieurs dispositifs (1, 2) à mettre à jour seulement si ladite requête de mise à jour en provenance du Système Central de Gestion (20) est validée et autorisée depuis au moins certains des nœuds (51, 52) du système à chaîne de blocs (50), et dans lequel ladite requête de mise à jour est délivrée depuis le système à chaîne de blocs (50) sur les un ou plusieurs dispositifs (1, 2) à mettre à jour par l'intermédiaire d'un second processus de médiation (40) qui est associé aux dispositifs (1, 2, 3) de la plate-forme de l'Internet des Objets, **caractérisé par le fait que** la mise à jour est une mise à jour par voie hertzienne, OTA ;
- le second processus de médiation (40) est exécuté dans au moins l'un des dispositifs (1, 2, 3) de la plate-forme de l'Internet des Objets (10) ;
- chaque dispositif (1) desdits un ou plusieurs dispositifs (1, 2) qui ont reçu la mise à jour applique la mise à jour et retourne au système à chaîne de blocs (50) un événement et/ou une réponse au moyen dudit second processus de médiation (40), une fois que la mise à jour a été appliquée ;
- ladite mise à jour en provenance du Système Central de Gestion (20) est une commande OTA qui est adressée depuis un utilisateur du Système Central de Gestion (20) sur les un ou plusieurs desdits dispositifs (1, 2) à mettre à jour ;
- le processus de médiation (80) du Système Central de Gestion (20) récupère une clé cryptographique qui est associée à l'utilisateur dans le Système Central de Gestion et retourne la commande OTA sur le système à chaîne de blocs (50) en tant que requête de transaction qui est signée au moyen de ladite clé cryptographique de l'utilisateur ; et dans lequel :
- les nœuds (51, 52) du système à chaîne de blocs (50) reçoivent la requête de transaction en provenance du processus de médiation (80) et la délivrent sur d'autres nœuds (52) du système à chaîne de blocs (50) à des fins de vérification.

2. Procédé selon la revendication 1, dans lequel ledit au moins un des dispositifs (1, 2, 3) de la plate-forme de l'Internet des Objets (10) qui exécute le second processus de médiation (40) inclut une interface de télécommunication (70) et dans lequel l'interface de télécommunication (70) reçoit la requête de mise à jour desdits un ou plusieurs dispositifs (1, 2) directement en provenance du système à chaîne de blocs (50).

3. Procédé selon la revendication 2, dans lequel ladite requête de mise à jour et ledit événement et/ou ladite réponse sont associés à une transaction de chaîne de blocs.

4. Procédé selon la revendication 3, dans lequel ladite requête de mise à jour et/ou ledit événement et/ou ladite réponse sont/est annexé(e)(s) à un registre de la chaîne de blocs seulement si les nœuds (51, 52) de la chaîne de blocs atteignent un consensus, dans lequel le consensus pour annexer la requête de mise à jour et/ou l'événement et/ou la réponse au registre est atteint si des nœuds selon un nombre prédéterminé de nœuds parmi les nœuds (51, 52) de la chaîne de blocs ont validé la requête de mise à jour et/ou l'événement et/ou la réponse.

5. Procédé selon la revendication 4, dans lequel le processus de médiation (80) du Système Central de Gestion (20) est autorisé à lire le registre et à récupérer à partir du registre l'événement et/ou la réponse de dispositifs (1, 2, 3) de la plate-forme de l'Internet des Objets afin de contrôler/commander l'historique de mises à jour desdits dispositifs (1,2, 3).

6. Procédé selon la revendication 1, dans lequel :
- ledit événement et/ou ladite réponse sont/est adressé(e)(s) depuis le dispositif (1) de la plate-forme de l'Internet des Objets (10) qui a appliqué la mise à jour au Système Central de Gestion (20), dans lequel le second processus de médiation (40) récupère une clé cryptographique qui est associée audit dispositif (1) de la plate-forme de l'Internet des Objets (10) qui a appliqué la mise à jour et retourne l'événement et/ou la réponse sur la chaîne de blocs en tant que transaction de chaîne de blocs qui est signée à l'aide de ladite clé cryptographique du dispositif ; dans lequel :
- les nœuds (51, 52) de la chaîne de blocs (50) reçoivent la requête de transaction en provenance du processus de médiation (40) et la délivrent sur d'autres nœuds (52) du système à chaîne de blocs à des fins de vérification.

7. Procédé selon la revendication 1, dans lequel la mise à jour est un micrologiciel, ou une mise à jour de logiciel ou une mise à jour d'un script qui peut est exécuté(e) par lesdits un ou plusieurs dispositifs (1, 2) à mettre à jour ou une modification de configuration desdits un ou plusieurs dispositifs (1, 2) à mettre à jour.

8. Procédé selon la revendication 1, dans lequel les dispositifs (1, 2) de la plate-forme de l'Internet des Objets sont connectés par l'intermédiaire d'une connexion sans fil basse consommation LPWAN ou Bluetooth.

9. Procédé selon la revendication 1, dans lequel chaque nœud (51) du système à chaîne de blocs (50) est exécuté dans une Machine Virtuelle ou une Image de Conteneur (un fichier statique non modifiable), dans lequel une ou plusieurs Machine(s) Virtuelle(s) ou Image(s) de Conteneur d'un ou de plusieurs nœuds correspondant(s) est/sont sur un même poste de travail.

10. Procédé selon la revendication 1, dans lequel les nœuds (51, 52) du système à chaîne de blocs (50) sont des dispositifs physiques.

11. Actionneur ou capteur, dans lequel l'actionneur ou le capteur comprend un microcontrôleur qui déroule un programme informatique, dans lequel le programme informatique est configuré pour enregistrer l'actionneur ou le capteur dans la plate-forme de l'Internet des Objets et pour mettre à jour l'actionneur ou le capteur au moyen d'un procédé selon l'une quelconque des revendications 1 à 10.

12. Actionneur ou capteur selon la revendication 11, dans lequel l'enregistrement de l'actionneur ou du capteur dans la plate-forme de l'Internet des Objets comprend l'enregistrement d'une clé publique qui est associée à l'actionneur ou au capteur.
